# EUROPEAN PATENT SPECIFICATION

(11) **EP 0 670 936 B1**
(45) Date of publication and mention of the grant of the patent: **10.09.1997**
(21) Application number: 94900235.6
(22) Date of filing: 19.11.1993
(51) Int. Cl.: E02B 3/04

(54) **BUILDING OR BLOCKING COMPONENT**
BAU- ODER SPERRELEMENT
ELEMENT DE CONSTRUCTION OU DE BLOCAGE

(30) Priority: 19.11.1992 GB 9224235; 01.05.1993 GB 9309077
(43) Date of publication of application: 13.09.1995
(73) Proprietor: TOPBLOCK LIMITED, Wakefield, West Yorkshire WF4 3HT (GB)
(72) Inventor: Powell, James Anthony, Bradford, West Yorkshire BD13 4BB (GB)
(74) Representative: Brierley, Anthony Paul
(86) International application number: GB9302384
(87) International publication number: WO9411581

(56) References cited:
- AT-A- 368 222
- DE-A- 2 514 830
- FR-A- 2 643 400
- US-A- 3 928 701
- US-A- 4 850 738

## Description

This invention relates to building or blocking components and is particularly concerned with such components for use in preventing or resisting coastline or other water course erosion or soil erosion.

AT-A-368 222 discloses a waterbank facing that consists of used vehicle tyres bound to each other wherein a tyre flank removed from a tyre may be inserted in the inside space of the tyre from which it has been removed in order to stiffen the tyre and give it greater stability.

US-A-4850 738 discloses a roadway mat comprising vehicle tyres or portions of vehicle tyres containing vehicle tyre "chips" which co-operate with one another and with the tyre to form a plurality of water seepage channels.

The invention aims to provide a use for the very large quantities of scrap tyres which have proved and which are proving to be a constant source of concern, particularly in these days of environmental awareness.

According to the present invention there is provided a building or blocking component comprising a scrap tyre characterised in that said scrap tyre houses a plurality of portions of other scrap tyres, said plurality of portions comprising lengths of tread and side walls.

Said lengths of tread may be closed lengths or loops as would be had by the de-walling of a tyre, or they may be cut lengths of scrap tyre tread.

Said lengths of tread will preferably be inserted into the complete scrap tyre and will be held within the scrap tyre by the walls thereof.

By partially or wholly de-walling scrap tyres and placing the side wall portions of tyres in a bowl or basin formed by removing one side wall of a scrap tyre such that said side wall portions nested within the bowl or basin.

It is advisable and/or beneficial if the scrap tyre used to form the bowl or basin were de-walled along the depth of the side wall rather than removed completely, since the remaining side wall would provide an integral means of retaining the side walls which are placed inside the bowl or basin as in the form of a lip.

The centre of the complete commercial scrap tyre may be filled by means of a building or blocking component of a smaller size, made up as earlier described in the form of a basin/bowl filled with side wall and cut tread lengths. Alternative, said centre may be filled by other means, but preferably utilising parts or portions of scrap tyres.

The composite building or blocking component may be held together by the use of steel or other material bands.

In order to provide a more stable barrier - in use of the building or blocking components to prevent or resist coastline or other water course erosion or soil erosion as well as various other civil engineering projects - a plurality of the building or blocking components may be located on a rigid or semi-rigid elongate member such as a metal or plastics material pole, and means may be provided on said pole to force adjacent building or blocking components into abutting relationship. Means may also be provided to join a plurality of said elongate members together so that the components may be arranged in an infinitely extending relationship. The means for causing abutment of the components on the elongate members may take the form of plates which are movable relative to the elongate members, and the means to connect the elongate members together may take the form of screw threads on the ends of the elongate members, although it will be appreciated that other means may be used if preferred.

With building or blocking components arranged as above-described, the components - carried on the elongate members - may be arranged in any convenient relationship so as to form a barrier. The components may be stacked on top of one another in pyramid fashion or any other formmation so as to provide an elongate, virtually solid, and very stable barrier to prevent or resist erosion both in coastline or other water course and soil situations. There are an abundance of civil engineering uses for the building and blocking component such as land fill, cribb walling and landslip barriers etc. By utilising scrap tyres as proposed in the present invention, not only are very effective barriers produced but in addition, and of equal importance perhaps, such utilisation will significantly reduce the ever-increasing stockpile of scrap tyres.

It will be appreciated that the building or blocking components may take forms other than those specifically described herein, and that use may be made of scrap tyres from cars, commercial vehicles and other forms of transport.

It is to be appreciated that blocking process can be achieved in any combination in using either all tyre walls or all cut tread lengths or a combination of both.

This PCT application is a combination and update of patent application number GB 92 24235.3 and patent application number GB 93 09077.7.

The building and blocking component when used in water course protection/erosion, especially rivers, lakes and canals as in river bank breaching etc will also act as an effective habitat for the breeding of molusks or other forms of marine life. In fact the marine life will inhabit the spaces or voids between the lengths of scrap tyre tread within the scrap tyre. Therefore, by causing the proliferation of marine life the cleansing of polluted water should follow.

In order that the invention may be more readily understood, embodiments thereof will now be described, by way of example, reference being made to the accompanying diagrammatic drawings, wherein:-
Figure 1 is a schematic elevation of a building or blocking component according to the present invention;
Figure 2 is a schematic elevation of a modification of the component of Figure 1; and
Figure 3 shows an alternative form of a building or blocking component according to the invention.

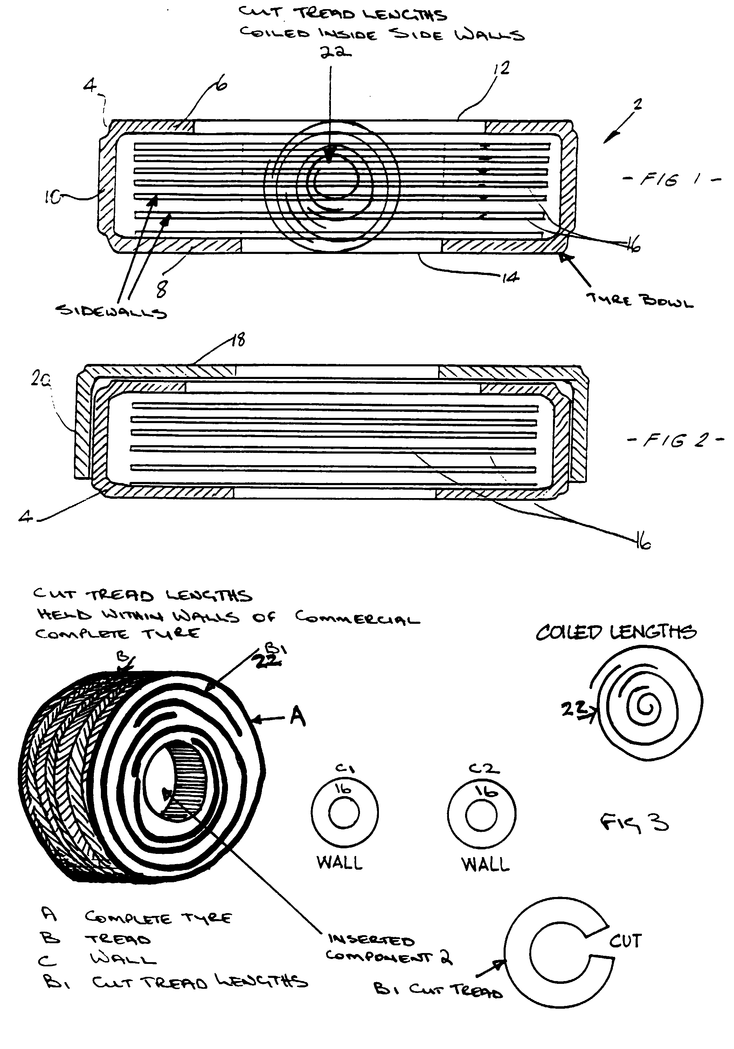

Referring to the drawings, and firstly to Figure 1, a building or blocking component indicated generally by reference numeral 2 comprises a scrap tyre 4 from which a proportion has been removed from one side wall 6 of the tyre, the other side wall 8 and the tread portion 10 remaining in tact and whole. Thus, and as will be seen, the hole 12 in the side wall 6 is greater than that 14 in the side wall 8.

Placed within the bowl or basin formed when the proportion of the side wall 6 is removed is a plurality 16 of side wall portions from other scrap tyres, these being provided to increase the weight of the component.

Because only part of the side wall 6 has been removed, the remaining portion of the side wall provides means in the form of a lip which serves to retain the plurality 16 of side walls within the bowl or basin. The said plurality may be further and additionally retained by means of strapping (not shown) passed around the tyre and through the remaining hole of the component.
Numeral 22 shows cut tread lengths coiled inside the side walls of the bowl in figure 1 adding further weight to block.

An alternative means of retaining the plurality of side walls and cut treads within the bowl or basin is shown in Figure 2. Such means is in the form a further scrap tyre 18 - of a larger size than the scrap tyre 4 - from which one side wall has been removed so as to form a bowl or basin 20. By placing the scrap tyre 18 'upside down' with respect to the scrap tyre 4, the plurality 16 of side walls become encased within the two bowls or basins formed by the scrap tyres. The whole may be strapped, if desired, as previously described.

## Claims

1. A building or blocking component comprising a scrap tyre characterised in that said scrap tyre houses a plurality of portions of other scrap tyres, said plurality of portions comprising lengths of tread and side walls.

2. A component according to Claim 1, wherein said tyre houses a plurality of portions of tread.

3. A component according to Claim 1 or Claim 2, wherein said tyre houses a plurality of portions of side walls.

4. A component according to any preceding claim, wherein said scrap tyre includes a tread region and said portions of other scrap tyres have a dimension which is greater than the width of the tread region.

5. A component according to any preceding claim, wherein said portions of other scrap tyres include portions which are substantially planar.

6. A component according to Claim 5, wherein the plane of said curved portions faces generally in the direction of the rotational axis of the tyre.

7. A component according to any preceding Claim, wherein said portions are coiled portions of other scrap tyres.

8. A component according to any preceding Claim, wherein said portions are closed lengths of other scrap tyres.

9. A component according to any preceding Claim, wherein said portions are held within the scrap tyre by the walls thereof.

10. An assembly comprising a plurality of scrap tyres characterised in that said scrap tyres house a plurality of portions of other scrap tyres, said plurality of portions comprising lengths of tread and side walls.

## Patentansprüche

1. Bau- oder Sperrelement, das einen Altreifen umfaßt, dadurch gekennzeichnet, daß der Altreifen eine Vielzahl von Teilen anderer Altreifen aufnimmt, wobei die Vielzahl von Teilen Laufflächenabschnitte und Seitenwände umfaßt.

2. Element nach Anspruch 1, wobei der Reifen eine Vielzahl von Laufflächenteilen aufnimmt.

3. Element nach Anspruch 1 oder Anspruch 2, wobei der Reifen eine Vielzahl von Seitenwandteilen aufnimmt.

4. Element nach einem der vorangehenden Ansprüche, wobei der Altreifen einen Laufflächenbereich enthält, und die Teile anderer Altreifen eine Abmessung haben, die größer ist als die Breite des Laufflächenbereiches.

5. Element nach einem der vorangehenden Ansprüche, wobei die Teile anderer Altreifen Teile enthalten, die im wesentlichen plan sind.

6. Element nach Anspruch 5, wobei die Ebene der gekrümmten Teile im wesentlichen in die Richtung der Drehachse des Reifens gewandt ist.

7. Element nach einem der vorangehenden Ansprüche, wobei die Teile gerollte Teile anderer Altreifen sind.

8. Element nach einem der vorangehenden Ansprüche, wobei die Teile geschlossene Abschnitte anderer Altreifen sind.

9. Element nach einem der vorangehenden Ansprüche, wobei die Teile durch die Wände des Altreifens in selbigem gehalten werden.

10. Baugruppe, die eine Vielzahl von Altreifen umfaßt, dadurch gekennzeichnet, daß die Altreifen eine Vielzahl von Teilen anderer Altreifen aufnehmen, wobei die Vielzahl von Teilen Laufflächenabschnitte und Seitenwände umfaßt.

## Revendications

1. Elément de construction ou de blocage comprenant un pneumatique de récupération, caractérisé en ce que ledit pneumatique de récupération renferme de multiples parties d'autres pneumatiques de récupération, lesdites multiples parties comprenant des longueurs de bandes de roulement et de flancs.

2. Elément selon la revendication 1, dans lequel ledit pneumatique renferme plusieurs parties de bandes de roulement.

3. Elément selon la revendication 1 ou la revendication 2, dans lequel ledit pneumatique renferme plusieurs parties de flancs.

4. Elément selon l'une quelconque des revendications précédentes, dans lequel ledit pneumatique de récupération comprend une zone de bande de roulement, et lesdites parties d'autres pneumatiques de récupération ont une dimension supérieure à la largeur de la zone de bande de roulement.

5. Elément selon l'une quelconque des revendications précédentes, dans lequel lesdites parties d'autres pneumatiques de récupération comprennent des parties sensiblement planes.

6. Elément selon la revendication 5, dans lequel le plan desdites parties courbes est orienté globalement dans la direction de l'axe de rotation du pneumatique.

7. Elément selon l'une quelconque des revendications précédentes, dans lequel lesdites parties sont des parties enroulées d'autres pneumatiques de récupération.

8. Elément selon l'une quelconque des revendications précédentes, dans lequel lesdites parties sont des longueurs fermées d'autres pneumatiques de récupération.

9. Elément selon l'une quelconque des revendications précédentes, dans lequel lesdites parties sont maintenues à l'intérieur du pneumatique de récupération par les parois de celui-ci.

10. Ensemble comprenant plusieurs pneumatiques de récupération, caractérisé en ce que lesdits pneumatiques de récupération renferment de multiples parties d'autres pneumatiques de récupération, lesdites multiples parties comprenant des longueurs de bandes de roulement et de flancs.
